# EUROPÄISCHE PATENTANMELDUNG

(11) **EP 3 026 383 A1**
(43) Veröffentlichungstag der Anmeldung: **01.06.2016**
(21) Anmeldenummer: 15191553.5
(22) Anmeldetag: 27.10.2015
(51) Int. Cl.: F27B 3/08, C21C 5/52, F27D 11/08, F27D 19/00

(54) **VERFAHREN UND VORRICHTUNG ZUR REGELUNG DER LEISTUNG EINES LICHTBOGENOFENS**

(30) Priorität: 28.11.2014 DE 102014224456; 19.12.2014 DE 102014226706
(71) Anmelder: SMS group GmbH, 40237 Düsseldorf (DE)
(72) Erfinder: Voj, Lukas Peter, 50858 Köln (DE)
(74) Vertreter: Klüppel, Walter

(57) **Zusammenfassung**

Die Erfindung betrifft ein Verfahren und eine Vorrichtung zur Regelung der Leistung eines elektrischen Lichtbogenofens zum Schmelzen von metallischem Ersatz. Das Verfahren sieht vor, dass zunächst eine bestimmte Soll-Leistung P_{Soll} für den Lichtbogenofen 200 vorgegeben wird, während der Lichtbogenofen mit einer vorbestimmten elektrischen Leistung betrieben wird. Es ist bekannt, die Ist-Leistung des Lichtbogenofens durch Zuführen eines Gases mit variablem Durchfluss und variabler Zusammensetzung zu variieren. Um die Leistungsregelung gegenüber dem Stand der Technik weiter zu präzisieren, sieht das erfindungsgemäße Verfahren vor, dass im Rahmen der Leistungsregelung die Bestimmung der Ist-Leistung P_{Ist} des Lichtbogenofens nicht nur auf Basis der vorgegebenen elektrischen Energie, sondern auch unter Berücksichtigung der jeweils aktuell gemessenen Zusammensetzung der Ofenatmosphäre erfolgt.

## Beschreibung

Die Erfindung betrifft ein Verfahren und eine Vorrichtung zur Regelung der Leistung eines elektrischen Lichtbogenofens zum Schmelzen von metallischem Ersatz.

Im Stand der Technik ist zum einen die Regelung der elektrischen Leistung eines Lichtbogenofens bekannt. Zum anderen ist es weiterhin bekannt, die Ist-Leistung des Lichtbogenofens bei vorgegebener Stromstärke durch Zuführen eines Gases, zum Beispiel Methan, in den Lichtbogenofen zu erhöhen. Dieser Effekt ist beispielsweise bekannt durch die Dissertation "Untersuchungen zur Erhöhung der Bogenspannung in Elektrolichtbogenöfen durch Einblasen mehratomiger Gase", Denis Spirin, Fakultät für Georessourcen und Materialtechnik an der RWTH Aachen, Dissertation 2003. Weiterhin offenbart das US-Patent US 4,037,043 ebenfalls die Möglichkeit, bei einem elektrischen Lichtbogenofen mit voreingestellter bestimmter elektrischer Leistung, dessen Gesamtleistung insbesondere am Lichtbogen zu variieren durch Zuführen eines Gases mit variablem Durchfluss und variabler Zusammensetzung in den Lichtbogenofen.

Ausgehend von diesem Stand der Technik liegt der Erfindung die Aufgabe zugrunde, ein bekanntes Verfahren und eine bekannte Vorrichtung zur Regelung der Leistung eines elektrischen Lichtbogenofens dahingehend weiterzubilden, dass die Leistungsregelung weiter präzisiert wird.

Diese Aufgabe wird durch das in Patentanspruch 1 beanspruchte Verfahren gelöst. Dieses Verfahren ist gekennzeichnet durch folgende Schritte: Bestimmen der Ist-Leistung des Lichtbogenofens auf Basis der vorgegebenen elektrischen Leistung und unter Berücksichtigung der jeweils aktuell gemessenen Zusammensetzung der Ofenatmosphäre; Bilden einer Regelabweichung durch Vergleichen der Ist-Leistung mit der vorgegebenen Soll-Leistung und Einstellen des Durchflusses und der Zusammensetzung des in den Lichtbogenofen zugeführten Gases nach Maßgabe der Regelabweichung.

Der Begriff "Gas" kann sowohl ein einzelnes Gas wie auch eine Gasmischung bedeuten.

Der Begriff "Ist-Leistung" wird in der vorliegenden Beschreibung synonym für "Heizleistung" verwendet.

Der Kern der vorliegenden Erfindung liegt in der Berücksichtigung der jeweils aktuell gemessenen Zusammensetzung der Ofenatmosphäre bei der Bestimmung der Ist-Leistung des Lichtbogenofens. Durch diese erfindungsgemäße Berücksichtigung der Ofenatmosphäre gelingt eine besonders präzise Leistungsregelung. Typischerweise erfolgt die Voreinstellung einer bestimmten elektrischen Leistung für den Lichtbogenofen durch Auswahl und Einstellung einer bestimmten Leistungsstufe (Arbeitspunkt) an einem Leistungstransformator, welcher die elektrische Leistung für den Lichtbogenofen bereitstellt. Die vorliegende Erfindung ermöglicht es, durch die Zuführung eines ausgewählten Gases in den Lichtbogenofen, bei dem Lichtbogenofen auch Leistungen einzustellen, die zwischen den Arbeitspunkten des Transformators liegen. Durch die Zuführung des Gases kann die Leistung des Lichtbogenofens stufenlos geregelt werden. Die erfindungsgemäße Berücksichtigung der Zusammensetzung der Ofenatmosphäre bei der Auswahl des zuzuführenden Gases ermöglicht eine gegenüber dem Stand der Technik präzisere Regelung der voreingestellten Leistung.

Gemäß einem ersten Ausführungsbeispiel wird ein mehratomiges Gas, beispielsweise Methan und/oder Kohlendioxyd, in den Lichtbogenofen zugeführt, wenn die Soll-Leistung größer als die Ist-Leistung ist. Durch diese Maßnahme wird die Ist-Leistung gesteigert.

Umgekehrt eigenen sich Edelgas, beispielsweise Argon oder Stickstoff für eine Zuführung in den Lichtbogenofen, wenn die Soll-Leistung kleiner als die aktuelle Ist-Leistung ist. Durch diese Maßnahme wird die Ist-Leistung verringert.

Grundsätzlich wird das Gas in einer solchen Menge und Zusammensetzung in den Lichtbogenofen zugeführt, dass seine Zuführung keinen unkontrollierten Einfluss auf die Zusammensetzung der Ofenatmosphäre hat. Die kontinuierliche Messung der Zusammensetzung der Ofenatmosphäre ist sinnvoll und sachdienlich, weil sich die Ofenatmosphäre aufgrund anderer Einflüsse während eines Schmelzvorganges ändert.

Das Gas wird beispielsweise durch eine Bohrung in den Elektroden des Lichtbogenofens in diesen zugeführt. Wenn ein Edelgas zugeführt wird, bewirkt dieses zwar im Vergleich zu Methan keine wesentliche Leistungserhöhung, jedoch bietet es den Vorteil einer deutlichen Schalldruckreduktion beim Betrieb des Lichtbogenofens.

Die oben genannte Aufgabe wird weiterhin durch die Vorrichtung nach Anspruch 10 gelöst. Die Vorteile dieser Vorrichtung entsprechen den oben mit Bezug auf das beanspruchte Verfahren genannten Vorteilen. Die Vorrichtung weist unter anderem eine Speichereinrichtung 125, beispielsweise in Form einer Cloud auf, in welcher eine Zuordnungstabelle hinterlegt ist, welche den Einfluss einzelner Gase oder Gasmischungen auf die Leistung des Lichtbogenofens, insbesondere die Heizleistung des Lichtbogens, aufzeigt.

Weitere vorteilhafte Ausgestaltungen des erfindungsgemäßen Verfahrens sind Gegenstand der abhängigen Ansprüche.

Der Erfindung sind zwei Figuren beigefügt, wobei
- Figur 1: die erfindungsgemäße Vorrichtung in Form eines Regelschematas; und
- Figur 2: das erfindungsgemäße Verfahren mit diversen Diagrammen
veranschaulicht.

Die Erfindung wird nachfolgend in Form von Ausführungsbeispielen unter Bezugnahme auf die genannten Figuren detailliert beschrieben. In beiden Figuren sind gleiche technische Elemente mit gleichen Bezugszeichen bezeichnet.

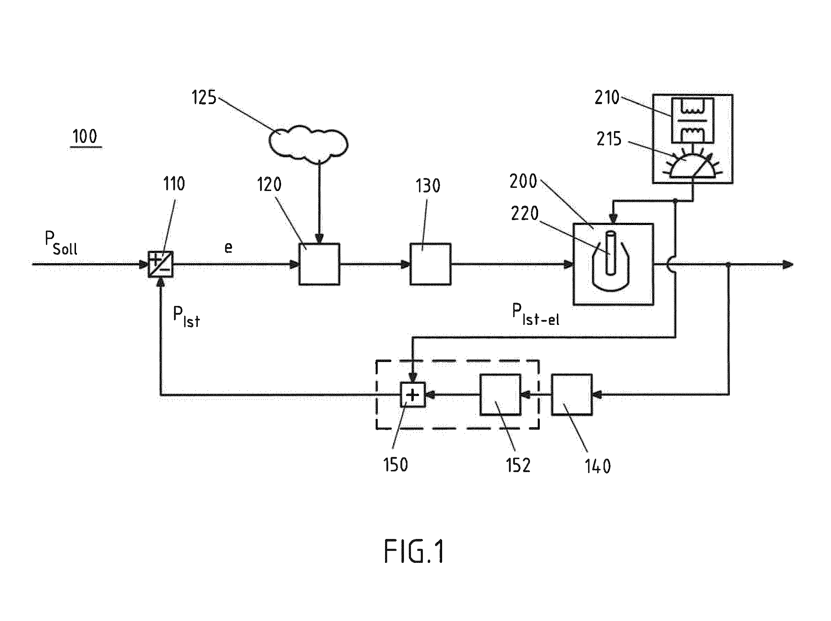

Figur 1 zeigt die erfindungsgemäße Vorrichtung 100 zur Regelung der Leistung eines Lichtbogenofens 200. Der Lichtbogenofen wird von einem elektrischen Transformator 210 mit elektrischer Leistung gespeist, wobei die elektrische Leistung über einen Leistungswahlschalter 215 in vorbestimmten Arbeitspunkten auswählbar und einstellbar ist.

Die Vorrichtung 100 weist einen Soll-/Ist-Wert-Vergleicher 110 auf zum Vergleichen einer vorgegebenen Soll-Leistung P_{Soll} für den Lichtbogenofen mit dessen jeweils aktueller Ist-Leistung L_{Ist} und zum Ermitteln der Differenz zwischen Soll- und Ist-Leistung als Regelabweichung e. Die Regelabweichung e dient als Eingangsgröße für eine Regeleinrichtung 120, welche nach Maßgabe der Regelabweichung die Zusammensetzung und den Durchfluss eines dem Lichtbogenofen zuzuführenden Gases bestimmt. Wenn die Regelabweichung e beispielsweise signalisiert, dass die Soll-Leistung P_{Soll} größer als die Ist-Leistung P_{Ist} ist, kann die Regeleinrichtung 120 beispielsweise Methan für die Zuführung in den Lichtbogenofen 200 vorsehen, um insgesamt eine Leistungssteigerung auf die Soll-Leistung zu erzielen. Die Zuführung des Gases erfolgt über eine Stelleinrichtung 130 beispielsweise durch eine Bohrung in mindestens einer der Elektroden 220 des Lichtbogenofens 200. Anderseits, wenn die Regelabweichung e anzeigt, dass die Soll-Leistung kleiner als die Ist-Leistung ist, kann die Regeleinrichtung beispielsweise Argon für die Zufuhr in den Lichtbogenofen 200 vorsehen, um die Ist-Leistung zu reduzieren. Die Regeleinrichtung 120 trifft ihre Entscheidung für die Zufuhr eines bestimmten Gases aufgrund einer Zuordnungstabelle, welche den Einfluss einzelner Gase auf die Leistung des Lichtbogenofens, insbesondere die Heizleistung des Lichtbogens aufzeigt. Eine solche Zuordnungstabelle ist in einer Speichereinrichtung, beispielsweise einer Cloud hinterlegt. Die Regeleinrichtung 120 kann auf diese Speichereinrichtung und die Zuordnungstabelle zugreifen. Grundsätzlich wird das von der Regeleinrichtung ausgewählte Gas lediglich in einer solch kleinen Menge in den Lichtbogenofen zugeführt, dass seine Zuführung keinen unkontrollierten Einfluss auf die Ofenatmosphäre hat.

Die erfindungsgemäße Vorrichtung 100 bzw. der in Figur 1 gezeigte Regelkreis sieht weiterhin vor, dass die Zusammensetzung der Ofenatmosphäre mit Hilfe einer Messeinrichtung 140 kontinuierlich erfasst und analysiert wird. Auf Basis dieser aktuellen Zusammensetzung der Ofenatmosphäre und der tatsächlich von dem Leistungstransformator abgegebenen elektrischen Leistung (P_{Ist-el}) berechnet eine Berechnungseinrichtung 150 die Ist-Leistung P_{Ist} des Lichtbogenofens. Um den Einfluss der Ofenatmosphäre auf die Ist-Leistung des Lichtbogenofens zu ermitteln, kann die Berechnungseinrichtung 150 ein Umrechnungsmodul 152 beinhalten. Die von der Berechnungseinrichtung 150 berechnete Ist-Leistung wird dem Vergleicher 110 zugeführt.

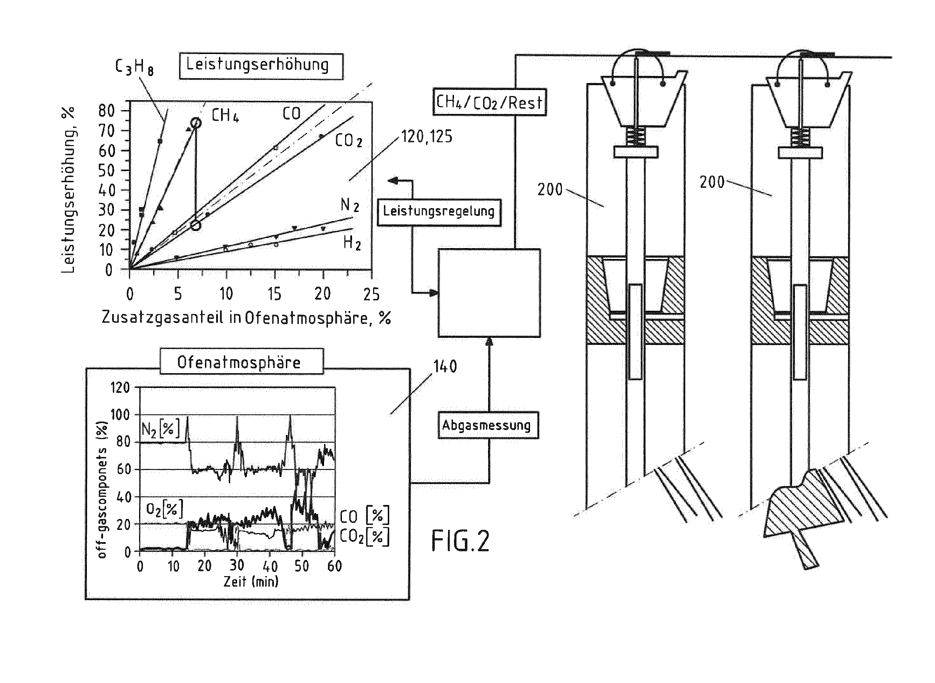

Figur 2 veranschaulicht einzelne Aspekte der zuvor beschriebenen Regelungsvorrichtung genauer. Zum einen zeigt das Diagramm links unten in Figur 1 die Funktionsweise der Messeinrichtung 140. Konkret ist zu erkennen, dass die Messeinrichtung 140 die prozentualen Anteile einzelner Gasbestandteile der Ofenatmosphäre zeitkontinuierlich erfasst. Weiterhin ist in dem Diagramm links oben zu erkennen, welchen Einfluss einzelne bestimmte Gase auf die Leistung des Lichtbogenofens und insbesondere auf die Ist-Leistung des Lichtbogens haben. So ist zu erkennen, dass bereits geringe Zusatzanteile von z.

B. Methan eine deutliche Leistungssteigerung bewirken, während für die Erreichung einer vergleichbaren Leistungssteigerung deutlich größere Mengen an z. B. Kohlenmonoxyd oder Kohlendioxyd erforderlich wären. Die Zuführung von z. B. Stickstoff bewirkt lediglich eine geringe Leistungssteigerung, wobei jedoch Helium, wie gesagt, den Vorteil einer deutlichen Schallreduzierung mit sich bringt. Weiterhin ist zu erkennen, dass die Zuführung des ausgewählten Gases, in Figur 2 beispielhaft CH4/CO2, eine Umwandlung des vorher kalten Plasmas des Lichtbogens in ein heißes Plasma des Lichtbogens, d. h. eine deutliche Steigerung der Ist-Leistung bewirkt.

### Bezugszeichenliste

- 100: Vorrichtung
- 110: Soll-/Ist-Wert-Vergleicher
- 125: Speichereinrichtung
- 130: Stelleinrichtung
- 140: Messeinrichtung
- 150: Berechnungseinrichtung
- 152: Umrechnungsmodul
- 200: Lichtbogenofen
- 210: Leistungstransformator
- 215: Leistungswahlschalter
- 220: Elektrode

- e: Regelabweichung
- P_{Ist}: Ist-Leistung
- P_{Soll}: Soll-Leistung

## Patentansprüche

1. Verfahren zur Regelung der Leistung eines elektrischen Lichtbogenofens (200) zum Schmelzen von metallischem Ersatz, umfassend folgende Schritte während seines Betriebs:
- Vorgeben einer bestimmten Soll-Leistung (P_{Soll}) für den Lichtbogenofen (200);
- Voreinstellen einer bestimmten elektrischen Leistung für den Lichtbogenofen (200); und
- Variieren der Ist-Leistung des Lichtbogenofens (200) durch Zuführen eines Gases in den Lichtbogenofen mit variablem Durchfluss und variabler Zusammensetzung;
**gekennzeichnet durch** folgende Schritte:
- Bestimmen der Ist-Leistung (P_{Ist}) des Lichtbogenofens (200) auf Basis der vorgegebenen elektrischen Leistung (P_{Ist-el}) und unter Berücksichtigung der jeweils aktuell gemessene Zusammensetzung der Ofenatmosphäre;
- Bilden einer Regelabweichung (e) **durch** Vergleichen der Ist-Leistung (P_{Ist}) mit der vorgegebenen Soll-Leistung (P_{Soll}); und
- Einstellen des Durchflusses und der Zusammensetzung des in den Lichtbogenofen (200) zugeführten Gases nach Maßgabe der Regelabweichung.

2. Verfahren nach Anspruch 1,
**dadurch gekennzeichnet, dass**
als Gas beispielsweise Methan und/oder Kohlendioxid in den Lichtbogenofen (200) zugeführt wird, wenn die Soll-Leistung (P_{Soll}) größer als die Ist-Leistung (P_{Ist}) ist.

3. Verfahren nach Anspruch 1,
**dadurch gekennzeichnet, dass**
als Gas beispielsweise Argon und/oder Stickstoff in den Lichtbogenofen (200) zugeführt wird, wenn die Soll-Leistung kleiner als die Ist-Leistung ist.

4. Verfahren nach einem der vorangegangenen Ansprüche,
**dadurch gekennzeichnet, dass**
das Gas lediglich in einer solch kleinen Menge in den Lichtbogenofen (200) zugeführt wird, dass seine Zuführung keinen messbaren bzw. unkontrollierten Einfluss auf die Ofenatmosphäre hat.

5. Verfahren nach einem der vorangegangen Ansprüche,
**dadurch gekennzeichnet, dass**
die Voreinstellung elektrische Leistung (P_{Ist-el}) für den Lichtbogenofen (200) durch Anwahl eines bestimmten Arbeitspunktes eines Leistungstransformators (210) erfolgt, welcher den Lichtbogenofen (200) mit elektrischer Energie versorgt.

6. Verfahren nach einem der vorangegangenen Ansprüche,
**dadurch gekennzeichnet, dass**
in einer Speichereinrichtung (125), beispielsweise einer Cloud, eine Zuordnungstabelle hinterlegt ist, welche den Einfluß einzelner Gase oder Gasmischungen auf die Leistung des Lichtbogenofens, insbesondere die Ist-Leistung des Lichtbogens aufzeigt; und
der Durchfluss und die Zusammensetzung des in den Lichtbogenofen zugeführten Gases unter Berücksichtigung dieser Zuordnungstabelle ausgewählt werden.

7. Verfahren nach einem der vorangegangenen Ansprüche,
**dadurch gekennzeichnet, dass**
das Gas durch eine Bohrung in einer Elektrode (220) des Lichtbogenofens (200) in diesen zugeführt wird.

8. Verfahren nach einem der vorangegangenen Ansprüche,
**dadurch gekennzeichnet, dass**
als Gas z.B. Helium zugeführt wird.

9. Vorrichtung (100) zur Regelung der Leistung eines Lichtbogenofens (200), welcher von einem Leistungstransformator (210) entsprechend einem angewählten Arbeitspunkt mit einer elektrischer Leistung gespeist wird, aufweisend:
einen Soll-/Ist-Wert-Vergleicher (110) zum Vergleichen einer vorgegebenen Soll-Leistung (P_{Soll}) für den Lichtbogenofen (200) mit dessen jeweils aktueller Ist-Leistung (P_{Ist}) und zum Ermitteln einer entsprechenden Leistungsdifferenz als Regelabweichung (e);
eine Regeleinrichtung (120) zum Bestimmen des Durchflusses und
Auswählen der Zusammensetzung eines dem Lichtbogenofen zuzuführenden Gases nach Maßgabe der Regelabweichung (e);
eine Stelleinrichtung (130) zum Zuführen des von der Regeleinrichtung ausgewählten Gases in den Lichtbogenofen;
eine Messeinrichtung (140) zum Messen der aktuellen Zusammensetzung der Ofenatmosphäre;
eine Berechnungseinrichtung (150) zum Berechnen der Ist-Leistung (P_{Ist}) des Lichtbogenofens auf Basis der tatsächlich von dem Leistungstransformator abgegebenen elektrischen Leistung (P_{Ist-el}) und der aktuellen Zusammensetzung der Ofenatmosphäre.

10. Vorrichtung (100) nach Anspruch 9,
**gekennzeichnet durch**
eine Speichereinrichtung (125), beispielsweise eine Cloud, in welcher eine Zuordnungstabelle hinterlegt ist, welche den Einfluß einzelner Gase oder Gasmischungen auf die Ist-Leistung des Lichtbogenofens aufzeigt.
